# DEMANDE DE BREVET EUROPEEN

(11) **EP 4 616 759 A1**
(43) Date de publication de la demande: **17.09.2025**
(21) Numéro de dépôt: 25159377.8
(22) Date de dépôt: 21.02.2025
(51) Int. Cl.: A47B 13/02, A47B 13/06, F16B 12/52, F16B 12/30

(54) **ENSEMBLE DE MOBILIER EXTÉRIEUR À TRAVERSES CROISÉES ET FIXATION INVISIBLE**

(30) Priorité: 15.03.2024 FR 2402596
(71) Demandeur: Trigano Jardin, 75019 Paris (FR)
(72) Inventeur: BOUAZIZ, Hamza, 41100 Vendöme (FR)
(74) Mandataire: Gevers & Orès

(57) **Abrégé**

L'invention concerne un élément (12) de mobilier extérieur, comportant au moins un premier profilé tubulaire (14) formant un montant orienté selon une première direction (Z), des deuxième et troisième profilés tubulaires (16, 18) formant des traverses orientées selon des deuxièmes et troisièmes directions perpendiculaires (X, Y) à la première direction (Z), les deuxième et troisième profilés se croisant dans une zone de croisement (28) et étant fixés au premier profilé (14) au niveau de la zone de croisement (28), caractérisé en ce que :
- les deuxième et troisième profilés (16, 18) sont assemblés dans la zone de croisement (28) par un premier assemblage à mi-bois,
- le premier profilé (14) est fixé à une paroi du deuxième profilé (16) et/ou du troisième profilé (18) par un système (11) de fixation invisible depuis l'extérieur des profilés.

## Description

### Domaine technique de l'invention

L'invention concerne un élément de mobilier extérieur, notamment un élément d'un mobilier extérieur de jardin tel qu'une tonnelle, une table, ou toute autre structure similaire.

### Arrière-plan technique

Les mobiliers de jardin réalisés par assemblage de profilés métalliques sont connus de longue date de l'état de la technique.

Ils utilisent pour la plupart des profilés métalliques à base d'aluminium, légers, qui permettent l'acheminement de ces mobiliers en pièces détachées sur leur site d'utilisation de manière simple et aisée de par leur poids réduit, et garantissent une solidité satisfaisante du mobilier une fois assemblés, ainsi que la résistance de ce mobilier aux intempéries.

Conventionnellement, un élément de mobilier extérieur en construction métallique comporte un montant tubulaire orienté selon une première direction, par exemple verticale, et deux traverses tubulaires, par exemple horizontales, orientées selon des deuxièmes et troisièmes directions perpendiculaires l'une à l'autre et perpendiculaires à la première direction. Les montant et traverses sont généralement réalisés à partir de profilés tubulaires. Dans le cadre d'une construction métallique, les profilés sont généralement réunis à leurs extrémités, et la jonction des profilés est généralement réalisée soit à l'aide d'un élément intermédiaire dont des organes sont insérés dans chacun des profilés, soit à l'aide d'un système de fixation interposé entre les profilés, comme par exemple un système d'équerres, visible depuis l'extérieur des profilés.

L'utilisation d'un élément intermédiaire avec des organes insérés dans les profilés nécessite un ajustement extrêmement précis de ces organes dans les profilés afin de garantir un l'assemblage rigide et sans jeu, ce qui complique le montage de cet élément intermédiaire relativement aux profilés.

L'utilisation d'un système de fixation tel qu'un système d'équerres interposé entre les profilés est plus simple d'utilisation mais présente néanmoins l'inconvénient d'exposer ce système de fixation aux intempéries, rendant ainsi son démontage potentiellement problématique pour l'avenir, dès lors qu'il aura été soumis à la corrosion.

Par ailleurs, il n'a pas jusqu'ici été envisagé de proposer d'éléments de mobilier extérieur en construction métallique comportant des traverses croisées, celles-ci étant au mieux superposées dans des plans parallèles, comme c'est du reste couramment le cas dans le cadre de constructions en bois conventionnelles, pour lesquelles les traverses sont assemblées l'une à l'autre par des systèmes de fixations visibles depuis l'extérieur.

Or, on a constaté qu'un croisement des traverses permettrait d'améliorer la rigidité de l'assemblage formé par ces deux traverses, et par conséquent la rigidité globale de l'élément de mobilier extérieur dans sa globalité.

Il existe donc un réel besoin pour un élément de mobilier extérieur comportant un tel croisement de traverses ainsi qu'un système de fixation permettant de fixer ces traverses au montant, tout en étant exempt des défauts susmentionnés système de fixation connu de l'état de la technique.

### Résumé de l'invention

L'invention satisfait à ce besoin en proposant un ensemble de mobilier extérieur en construction métallique tubulaire comportant des traverses entrecroisées, assemblées de manière invisible au montant.

Dans ce but, l'invention propose un élément de mobilier extérieur, comportant au moins un premier profilé tubulaire formant un montant orienté selon une première direction, des deuxième et troisième profilés tubulaires formant des traverses orientées selon des deuxièmes et troisièmes directions perpendiculaires à la première direction, les deuxième et troisième profilés se croisant dans une zone de croisement et étant fixés au premier profilé au niveau de la zone de croisement, caractérisé en ce que :
- les deuxième et troisième profilés sont assemblés dans la zone de croisement par un premier assemblage à mi-bois,
- le premier profilé est fixé à une paroi du deuxième profilé et/ou du troisième profilé par un système de fixation invisible depuis l'extérieur des profilés.

L'assemblage des deuxièmes et troisièmes profilés par un assemblage à mi-bois permet, outre son aspect esthétique, d'assurer une rigidité de l'assemblage de ces deuxièmes et troisièmes profilés. La fixation du premier profilé au deuxième et/ou troisième profilé par un système de fixation invisible depuis l'extérieur garantit une protection de ce système de fixation aux intempéries, gage de fiabilité en cas de démontage ultérieur de l'ensemble de mobilier.

Selon différentes caractéristiques supplémentaires de l'invention, qui pourront être prises ensemble ou séparément et qui forment autant de modes de réalisation de l'invention :
- chacun des premier à troisième profilé est tubulaire de section carrée ou rectangulaire, avec quatre parois latérales opposées deux à deux et s'étendant suivant la direction dudit profilé,
- le système de fixation invisible comporte un ensemble composé d'au moins une platine de fixation et d'au moins une vis, ladite au moins une vis traversant une seule paroi latérale, dite de fixation du deuxième ou troisième profilé, ladite platine étant logée à l'intérieur du premier profilé et présentant au moins un orifice d'accueil de la vis, notamment taraudé,
- la platine de fixation est disposée au contact d'au moins une paroi latérale du premier profilé,
- la platine comporte au moins une plaque dite de fixation appliquée au contact d'une paroi latérale, dite de fixation, du premier profilé, la vis traversant successivement une paroi latérale, dite de fixation, du deuxième profilé ou du troisième profilé, puis la paroi latérale de fixation du premier profilé, puis la plaque de fixation via l'orifice d'accueil,
- la platine est conformée en une équerre comportant deux branches formées chacune d'une plaque de fixation, les plaques étant de fixation appliquées au contact de deux parois latérales adjacentes de fixation du premier profilé,
- le premier profilé est fixé à une paroi latérale de fixation de chacun des deuxième et troisième profilés par un système de fixation invisible et de surcroît par au moins un système de fixation supplémentaire visible depuis l'extérieur des profilés, ledit système de fixation supplémentaire comportant deux plaques entrecroisées s'étendant sur les parois latérales de fixation des premier à troisième profilés et fixées auxdits premier à troisième profilés,
- chaque plaque du système de fixation supplémentaire comporte :
   - une première partie, interposée entre la paroi verticale de fixation dudit deuxième ou troisième profilé et la paroi de fixation du premier profilé en étant traversée par l'au moins une vis de fixation,
   - une deuxième partie comportant une découpe complémentaire de l'autre des deuxième ou troisième profilés, ladite deuxième partie comportant sous cette découpe une portion inférieure assemblée à une portion inférieure de la plaque associée à l'autre des deuxième ou troisième profilés par un deuxième assemblage à mi-bois,
   - une troisième partie s'étendant sur la paroi verticale de fixation dudit deuxième ou troisième profilé, et fixée à ladite paroi verticale par des premières vis supplémentaires,
- chaque première partie est en outre fixée à ladite paroi de fixation du premier profilé sous la zone de croisement par des secondes vis supplémentaires,
- la platine s'étend transversalement par rapport à la première direction et est fixée au contact d'au moins deux parois latérales du premier profilé,
- au moins un perçage est agencé dans chaque paroi latérale opposée à une paroi latérale de fixation d'un deuxième ou troisième profilé, coaxialement à ladite au moins une vis, ledit perçage étant configuré pour permettre le passage de ladite au moins une vis,
- le perçage est obturé par un bouchon.

L'invention concerne aussi une tonnelle comportant quatre éléments de mobilier extérieur du type décrit précédemment, associés en quatre montants de premières directions verticales et au moins quatre traverses de deuxième et troisième directions horizontales.

### Brève description des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
[Fig. 1] La figure 1 est une vue d'ensemble en perspective d'une tonnelle comportant des éléments de mobilier extérieur selon l'invention ;
[Fig. 2] La figure 2 est une vue de détail en perspective d'un premier mode de réalisation d'un élément de mobilier extérieur selon l'invention ;
[Fig. 3] La figure 3 est une vue de détail en perspective des deuxièmes et troisièmes profilés et de l'équerre de l'élément de mobilier extérieur de la figure 2, le premier profilé ayant été ôté ;
[Fig. 4] La figure 4 est une vue de détail en perspective du croisement des deuxièmes et troisièmes profilés de l'élément de mobilier extérieur de la figure 2 ;
[Fig. 5] La figure 5 est une vue de détail en perspective d'un des deuxièmes ou troisièmes profilés ;
[Fig. 6] La figure 6 est une autre vue de détail en perspective du premier mode de réalisation de l'élément de mobilier extérieur selon l'invention ;
[Fig. 7] La figure 7 est une vue de détail en perspective d'un deuxième mode de réalisation d'un élément de mobilier extérieur selon l'invention :
   [Fig. 8] La figure 8 est une vue de détail en perspective d'un troisième mode de réalisation d'un élément de mobilier extérieur selon l'invention ;
   [Fig. 9] La figure 9 est une vue de détail en perspective d'un quatrième mode de réalisation d'un élément de mobilier extérieur selon l'invention ;
   [Fig. 10] La figure 10 est une vue de détail en perspective d'un cinquième mode de réalisation d'un élément de mobilier extérieur selon l'invention ;
   [Fig. 11] La figure 11 est une vue de détail en perspective du cinquième mode de réalisation de l'élément de mobilier extérieur de la figure 10, un bouchon du premier profilé ayant été ôté ;
   [Fig. 12] La figure 12 est une vue de détail en perspective du premier profilé et de la platine de l'élément de mobilier extérieur de la figure 11 ;
   [Fig. 13] La figure 13 est une vue de détail en perspective de la platine de l'élément de mobilier extérieur de la figure 11 ;
   [Fig. 14] La figure 14 est une vue de détail en perspective d'un sixième mode de réalisation d'un élément de mobilier extérieur renforcé selon l'invention ;
   [Fig. 15] La figure 15 est une vue de détail en perspective des plaques entrecroisées d'un système de fixation supplémentaire de l'élément de mobilier extérieur renforcé de la figure 14 ;
   [Fig.16] La figure 16 est une vue de détail en perspective de la platine de l'élément de mobilier extérieur de la figure 14 ;
   [Fig. 17] La figure 17 est une vue de côté d'une des plaques du système de fixation supplémentaire de l'élément de mobilier extérieur renforcé de la figure 14.

### Description détaillée de l'invention

Dans la description qui va suivre, des chiffres de référence identiques désignent des pièces identiques ou ayant des fonctions similaires.

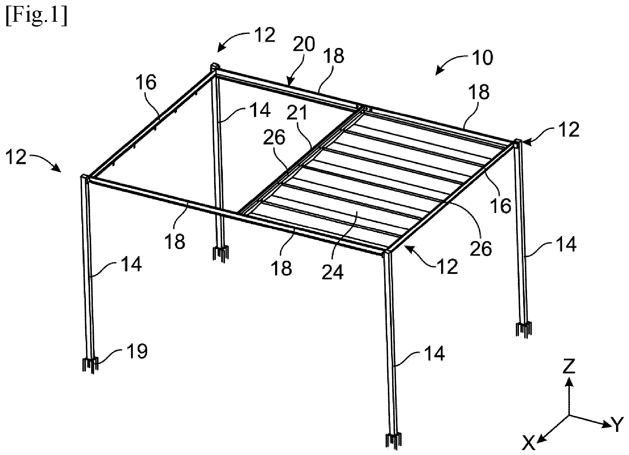

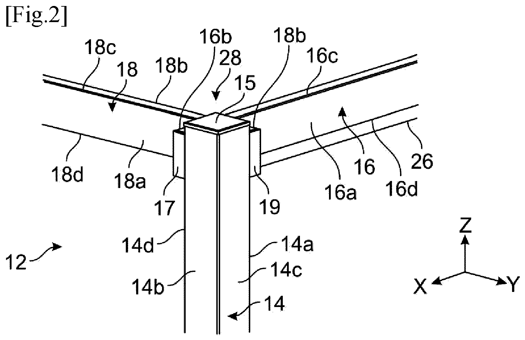

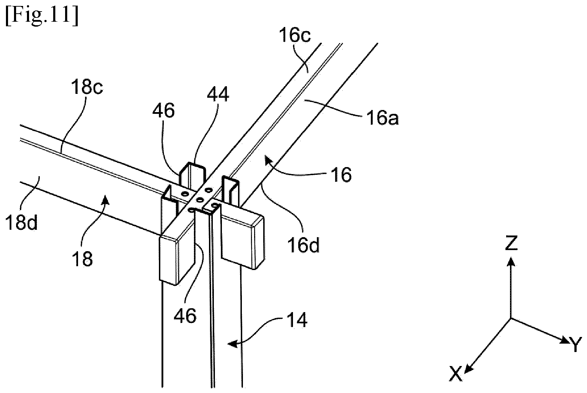

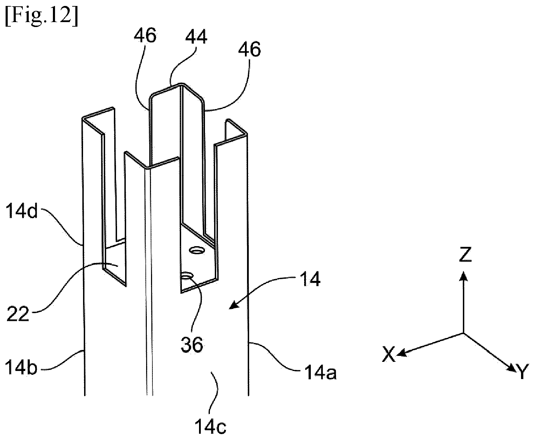

On a représenté à la figure 1 un mobilier extérieur 10 tel qu'une tonnelle, et aux figures 2 à 17, différents éléments 12 de mobilier extérieur pour ce mobilier extérieur 10, ainsi que leurs constituants, réalisés conformément à l'invention. Le mobilier extérieur 10, les éléments 12 de mobilier extérieur, et leurs constituants seront décrits en référence aux directions du trièdre « X », « Y », « Z », ou « X » désigne la direction transversale, « Y » désigne la direction longitudinale et « Z » désigne la direction verticale.

Comme l'illustre la figure 1, le mobilier extérieur ou tonnelle 10 est constitué de l'assemblage de quatre éléments 12 de mobilier extérieur. Chaque élément 12 de mobilier extérieur comporte au moins un premier profilé tubulaire 14 formant un montant orienté selon une première direction, ici la direction verticale Z, des deuxième profilés tubulaires 16 orientés selon une deuxième direction, ici la direction longitudinale X, et des troisièmes profilés tubulaires 18 orientés selon une troisième direction, ici la direction transversale Y. Les deuxièmes profilés tubulaires 16 et les troisièmes profilés tubulaires 18 forment des traverses délimitant un cadre supérieur 20 de la tonnelle 10.

L'exemple de réalisation de mobilier extérieur qui a été représenté ici est une tonnelle 10, mais il sera compris que cet exemple de réalisation n'est pas limitatif de l'invention et que celle-ci pourrait trouver à s'appliquer à d'autres types de mobilier extérieur, tels que des tables, des auvents ou tout autre structure pouvant être utilisé en extérieur.

Dans le cadre de la tonnelle 10, les premiers profilés tubulaires 14 sont reçus dans des pieds 19 ancrés au sol. La tonnelle 10 comporte par exemple deux profilés tubulaires longitudinaux 16 et quatre profilés tubulaires transversaux 18, ces derniers étant assemblés l'un à l'autre. Les deuxièmes et troisièmes profilés tubulaires 16, qui délimitent le cadre 20, sont en outre réunis par une traverse supplémentaire longitudinale 21 qui divise le cadre 20 en deux espaces de coulissement de velums 24 permettant au gré de l'utilisateur d'ouvrir ou de fermer la tonnelle 10 aux rayons du soleil. Les vélums 24 sont montés coulissants sur des câbles 26 de manière classique, toutefois, cette configuration ne faisant pas l'objet de la présente invention, elle ne sera pas décrite plus explicitement dans la suite de la présente description.

Les deuxièmes et troisièmes directions X, Y des deuxièmes et troisièmes profilés 16, 18 sont de préférence perpendiculaires à la première direction Z, de manière à conférer à la tonnelle 10 une structure de forme sensiblement parallélépipédique.

Conformément à l'invention, comme l'illustrent les figures 2, 6 à 11 et 14, les deuxième et troisième profilés 16, 18 se croisent dans une zone de croisement 28 et ils sont fixés au premier profilé 14 au niveau de cette zone de croisement 28.

La figure 2 représente d'une manière générale un ensemble de mobilier 12 conforme à l'invention dans lequel l'assemblage des deuxièmes et troisièmes profilés 16, 18 est réalisé dans la zone de croisement 28, et dans lequel le premier profilé 14 est fixé au deuxième profilé 16 et/ou au deuxième profilé 18 dans cette zone de croisement 28. Pour garantir la solidité de l'ensemble de mobilier 12, il suffit que les deuxième et troisième profilés soient assemblés l'un à l'autre et que le premier profilé 14 soit fixé à au moins un de ces deux profilés 16, 18.

Toutefois, de préférence, dans tous les modes de réalisation préférés de l'invention, on considéra pour la suite de la présente description de l'invention que le premier profilé 14 est fixé à la fois au deuxième profilé 16 et au troisième profilé 18.

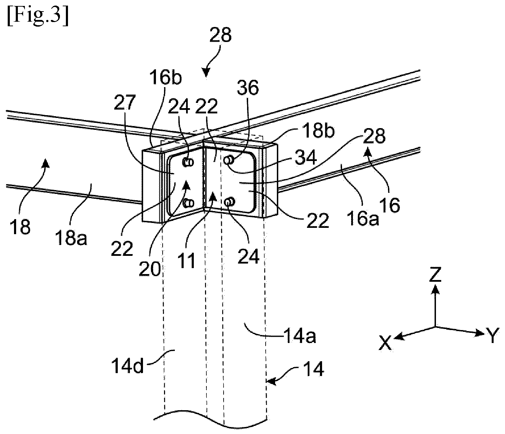

Conformément à l'invention, les deuxième et troisième profilés 16, 18 sont assemblés dans la zone de croisement 28 par un premier assemblage à mi-bois 23, qui sera détaillé dans la suite de la présente description. Par ailleurs, le premier profilé 14 est fixé à une paroi 16a du deuxième profilé 16 et/ou une paroi 18a du troisième profilé 18, et de préférence à ces deux parois 16a, 18a, par un système de fixation invisible 11 depuis l'extérieur des profilés 14, 16, 18, comme l'illustre la figure 3.

L'invention trouve à s'appliquer à tous types de profilés tubulaires 14, 16, 18, qu'il s'agisse de profilés cylindriques, ou polygonaux, tels que des profilés rectangulaires ou hexagonaux.

Toutefois, dans les modes de réalisation préférés de l'invention, chacun des premier à troisième profilé 14, 16, 18 est tubulaire de section carrée ou rectangulaire, avec quatre parois latérales opposées deux à deux, s'étendant suivant la direction X, Y, ou Z dudit profilé. Ainsi, chacun des premier à troisième profilés 14, 16, 18 comporte deux parois latérales opposées 14a, 14b, 16a, 16b, 18a, 18b et deux autres parois latérales opposées 14c, 14d, 16c, 16d, 18c, 18d. Dans les exemples de réalisation qui ont été représentés ici en relation avec la tonnelle 10, et de manière non limitative de l'invention, les parois latérales 16a, 16b, 18a, 18b des deuxième et troisième profilés 16, 18 sont des parois latérales verticales, tandis que les parois latérales des deuxième et troisième profilés 16c, 16d, 18c, 18d sont des parois latérales horizontales. Le premier profilé 14 comporte quant à lui quatre parois latérales verticales 14a, 14b, 14c, 14d. Les premiers à troisièmes profilés 14, 16, 18 sont par exemple réalisés par extrusion d'un alliage d'aluminium.

Dans les modes de réalisation préférés de l'invention, également, les parois latérales verticales 16a, 16b, 18a, 18b des deuxième et troisième profilés 16, 18 sont de même hauteur, ceci afin de faciliter, comme on va le voir, l'assemblage a mis-bois des profilés 16, 18, et de conférer un aspect esthétique au croisement de ces profilés 16, 18. Plus particulièrement, les parois latérales horizontales 16c, 16d, 18c, 18d des deuxième et troisième profilés 16, 18 sont également de même dimensions, de sorte que les deuxième et troisième profilés sont sensiblement de même section.

Avantageusement, chacun des premier à troisième profilé 14, 16, 18 est fermé à son extrémité par un bouchon 15, 17, 19,ce qui permet de manière classique d'éviter les infiltrations d'eau à l'intérieur des profilés.

En variante, chacun des premier à troisième profilé 14, 16, 18 pourrait être fermé à son extrémité par un chapeau (non représenté) emboîté sur le profilé, ou par tout autre moyen d'obturation du profilé.

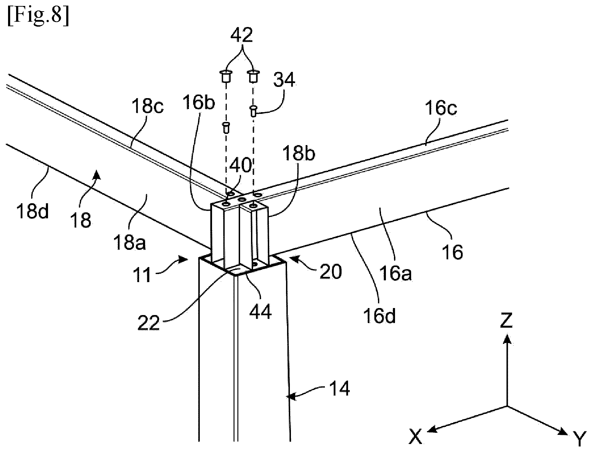

Les figures 3 et 8 illustrent plus en détail le principe d'un système de fixation invisible 11 selon l'invention. Sur la figure 3, le premier profilé 14 a été représenté en traits pointillés.

Conformément à l'invention, le système de fixation invisible 11 comporte de préférence un ensemble composé d'au moins une platine de fixation 22 et d'au moins une vis 34 dont on aperçoit l'extrémité sur la figure 3. La platine 22 est logée d'une manière générale à l'intérieur du premier profilé 14. L'au moins une vis 34 traverse une seule paroi latérale 16a, 18a, dite alors paroi de fixation 16a, 18a, du deuxième ou troisième profilé 16, 18, et la platine 22 présente au moins un orifice 36 correspondant d'accueil de la vis 34.

De préférence, la platine 22 comporte au moins deux orifices d'accueil 36 dédiés à la réception de deux vis 34 pour la fixation d'un des deuxième et troisième profilés 16, 18. Il sera compris que cette configuration n'est pas limitative de l'invention, et que la platine 22 pourrait comporter un nombre d'orifices d'accueil supérieurs associés à la fixation d'un des deuxième et troisième profilés 16, 18.

De préférence également, l'orifice 36 d'accueil de la vis 34 est un orifice taraudé, ce qui permet avantageusement d'éviter d'utiliser un écrou supplémentaire pour la fixation de la platine 22 au deuxième ou troisième profilé 16, 18 correspondant.

En variante, le système de fixation invisible pourrait comporter de manière classique des vis autoperceuses traversant les parois 16a, 18a des premier et deuxième profilé, et reçues dans le premier profilé 14.

Toujours en variante, le système de fixation invisible pourrait aussi comporter de manière classique des traversant les parois 16a, 18a des premier et deuxième profilé, et reçues dans des douilles soudées à l'intérieur du premier profilé 14, ou dans des écrous prisonniers emprisonnés dans des glissières formées par extrusion dans les parois extérieures du premier profilé 14.

Dans les modes de réalisation préféré de l'invention susmentionnés, il existe principalement deux types de platines 22.

Dans des premier, deuxième et sixième modes de réalisation de l'invention qui ont été représentés respectivement aux figures 1 à 7 et 14, la platine de fixation 22 est disposée au contact d'au moins une paroi latérale du premier profilé 14. Comme l'illustre la figure 3, la platine de fixation 22 comporte au moins une plaque dite de fixation 27 appliquée au contact d'une paroi latérale 14a, 14d, dite de fixation, du premier profilé 14, la vis 24 traversant successivement une paroi latérale 16a, 18a, dite de fixation, du deuxième profilé 16 ou du troisième profilé 18, puis la paroi latérale 14a, 14d de fixation du premier profilé 14, puis la plaque de fixation 27. Chaque plaque de fixation 27 s'étend de préférence verticalement sensiblement suivant la hauteur de la paroi latérale de fixation 16a, 18a du deuxième ou troisième profilé 16, 18 associé, de manière à répartir de manière optimale la pression exercée par la plaque de fixation 27 sur la paroi latérale de fixation 16a, 18a correspondante.

Comme on l'a vu, le premier profilé 14 pourrait n'être fixé qu'à l'un des deuxième ou troisième profilés 16, 18. Toutefois, il est de préférence fixé à la fois au deuxième profilé 16 et au troisième profilé 18. De ce fait, deux plaques de fixation 27 sont nécessaires pour assurer la fixation de chacune des parois de fixation 14a, 14d du premier profilé 14 aux parois de fixation correspondantes 16a, 18a du deuxième profilé 16 et du troisième profilé 18. Ces plaques de fixation 27 pourraient être indépendantes et en ce cas le système de fixation invisible 20 comporterait deux platines 22 comportant chacune une seule plaque de fixation 27.

Toutefois, dans chacun des premiers, deuxième et sixième modes de réalisation de l'invention, la platine 22 est conformée en une équerre comportant deux branches formées chacune d'une plaque de fixation 27, les plaques de fixation 27 étant appliquées au contact de deux parois 14a, 14d latérales adjacentes de fixation du premier profilé 14. Cette configuration permet avantageusement, lors du montage, de disposer la platine 22 en appui sur les deux parois latérales de fixation 14a, 14d du premier profilé 14 de sorte que dès lors qu'une vis 34 a été introduite dans un des orifices d'accueil 36 de la platine 22, celle-ci ne peut plus s'échapper à l'intérieur du premier profilé 14. Le montage de la platine 22 s'en trouve alors grandement facilité.

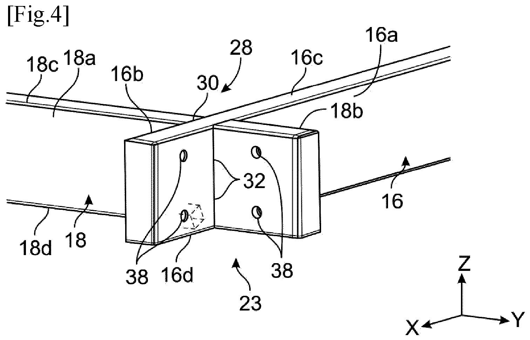

La figure 4 illustre le croisement des deuxième et troisième profilés 16, 18 selon le premier assemblage à mi-bois.

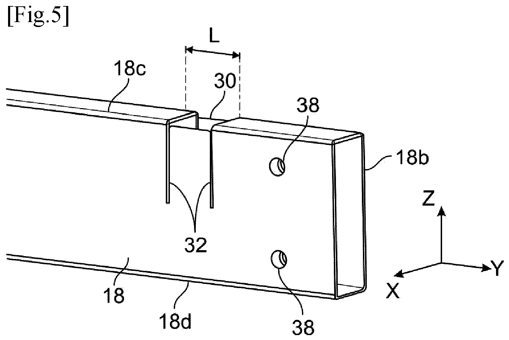

La figure 5 représente seulement le troisième profilé 18, étant donné que le deuxième profilé 16 est analogue au troisième profilé et sensiblement complémentaire de celui-ci. Comme l'illustre la figure 5, le troisième profilé 18 comporte une découpe supérieure 30 formée dans la paroi latérale horizontale supérieure 18c du troisième profilé 18, cette découpe 30 étant d'une longueur **L,** suivant la direction Y du troisième profilé 18, égale à une largeur de la paroi latérale horizontale supérieure 16a du deuxième profilé 16 suivant cette même direction Y. Cette découpe 30, comme l'illustre la figure 4, reçoit une partie de la paroi latérale horizontale supérieure 16a du deuxième profilé 16 lorsque les deuxième profilé 16 et troisième profilé 18 sont assemblés l'un à l'autre.

De la même manière, le deuxième profilé 16 comporte une découpe inférieure similaire (non représenté) formés dans sa paroi latérale horizontale inférieure 16d inférieure.

A partir de cette découpe 30 s'étendent quatre fentes verticales 32 jusqu'à mi-hauteur du troisième profilé 18, chaque fente 32 étant d'une largeur égale à une épaisseur d'une des parois latérales verticales opposées 16a, 16b du deuxième profilé 16. Chaque fente 32 est donc apte à permettre le passage d'une des paroi latérales verticales opposées 16a, 16b du deuxième profilé 16 à travers ladite fente 32, et donc à travers le troisième profilé 18.

**Il** sera donc compris que le deuxième profilé 16 comporte également quatre fentes verticales analogues qui s'étendent à partir de la découpe formée dans sa paroi latérale horizontale inférieure 16d inférieure, qui permettent le passage des parois latérales verticales 18a, 18b du troisième profilé 18 au travers du deuxième profilé 16.

Ainsi, la découpe 30 et les fentes 32 de chacun des deuxième et troisième profilés 16, 18 sont opposées verticalement les unes aux autres. Il sera donc compris que l'assemblage à mi-bois 23 des deuxième et troisième profilés 16, 18 résulte de deux assemblages à mi-bois de chacune des parois verticales 16a, 16b, 18a, 18b des deuxième et troisième profilés 16, 18.

On remarquera sur les figures 4 et 5 des perçages 38 formés dans les parois latérales verticales dites de fixation des deuxième et troisième profilés 16, 18. Ces perçages 38 permettent le passage des vis de fixation 34 et sont coaxiaux avec les orifices d'accueil 36.

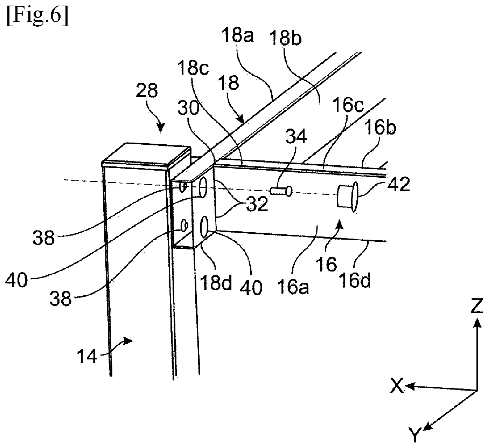

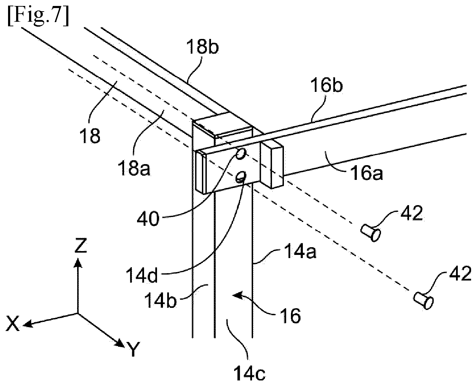

Avantageusement, comme l'illustrent les figures 6 et 7, dans chacun des premier, deuxième et sixième modes de réalisation de l'invention, pour chacun des deuxième ou troisième profilé 16, 18, au moins un perçage 40 est agencé dans chaque paroi latérale verticale 16b, 18b opposée à une paroi latérale verticale de fixation 16a , 18a de ce deuxième ou troisième profilé, coaxialement à la vis 34 de fixation 34. Ce perçage 40 est configuré pour permettre le passage de la vis 34 à travers la paroi 16b, 18b opposée à une paroi latérale de fixation 16a, 18a, de manière que la vis 34 n'assure le serrage que sur la paroi latérale de fixation 16a, 18a.

Ceci permet avantageusement, d'une part, que cette vis 34 soit invisible, et d'autre part, d'éviter toute déformation du deuxième ou troisième profilé 16 avril 18 en traversant le deuxième ou troisième profilé 16, 18 avec l'intégralité de la vis 34, ce qui risquerait de déformer le profilé 16, 18. Le perçage 40 est par exemple fermé par un bouchon 42.

Dans le premier mode de réalisation de l'invention, le premier profilé 14 est assemblé aux deuxième et troisième profilés 16, 18 dans la zone de croisement 28 à proximité de leurs extrémités, c'est-à-dire que les parois latérales verticales de fixation du deuxième et troisième profilé 16,18 sont les parois extérieures 16a, 18a.

Toutefois, la zone de croisement 28 délimite quatre emplacements possibles pour le positionnement du premier profilé 14 et il est par exemple possible, comme c'est le cas dans un deuxième mode de réalisation de l'invention qui a été représentée à la figure 7, de positionner le premier profilé 14 uniquement à l'extrémité d'un des deuxièmes ou troisièmes profilés, ici le deuxième profilé 16. Ainsi, dans ce deuxième mode de réalisation de l'invention, les parois latérales verticales de fixation du deuxième et troisième profilé 16,18 sont la paroi latérale verticale extérieure 18a du troisième profilé 18 et la paroi latérale verticale intérieure 16b du deuxième profilé 16, les parois verticales latérales de fixation du premier profilé étant les parois 14a et, 14c.

D'une manière analogue, en variante (non représentée), les parois latérales verticales de fixation du deuxième et troisième profilé 16,18 pourraient être la paroi latérale verticale intérieure 18b du troisième profilé 18 et la paroi latérale verticale extérieure 16a du deuxième profilé 16, les parois verticales latérales de fixation du premier profilé étant les parois 14b, 14d.

Toujours en variante (non représentée), les parois latérales verticales de fixation du deuxième et troisième profilé 16,18 pourraient aussi être les parois latérales verticales intérieures 16b, 18b des deuxièmes et troisièmes profilés 16, 18, de sorte que le premier profilé serait fixé à l'intérieur du cadre 20 par ses parois 14b, 14c.

Dans des troisième à cinquième modes de réalisation de l'invention qui ont été représentés respectivement aux figures 7 à 13, la platine 22 du système de fixation invisible 11 s'étend transversalement par rapport à la première direction verticale Z et elle est fixée au contact d'au moins deux parois latérales du premier profilé 14. Dans cette configuration, les parois latérales de fixation des deuxième et troisième profilés 16, 18 sont les parois latérales horizontales inférieures 16d, 18d, qui sont fixées directement à la platine 22, sans traverser de paroi du premier profilé 14 . Dans ce cas, chaque système de fixation invisible 11 comporte au moins une vis, cette au moins une vis traversant une seule paroi latérale 16d, 18d, dite de fixation du deuxième ou troisième profilé 16, 18.

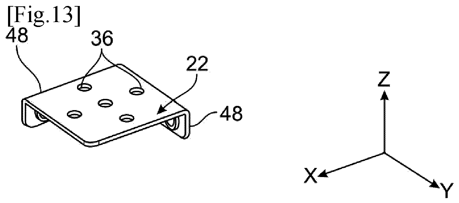

Comme précédemment, la platine 22 est logée à l'intérieur du premier profilé 14 et présente au moins un orifice d'accueil 36 de la vis 34, notamment un orifice taraudé. La platine 22 spécifique à ces modes de réalisation a été représentée en détail à la figure 13.

Les troisièmes à cinquièmes modes de réalisation de l'invention qui ont été représentés respectivement aux figures 8, 9 et 10 à 11 reposent sur le même principe et ne diffèrent les uns des autres que de par le positionnement de la platine 22 dans le premier profilé 14.

Dans le troisième mode de réalisation de l'invention qui a été représenté à la figure 8, la platine 22 affleure à l'extrémité 44 du premier profilé 14. Dans ce cas, les deuxième et troisième profilés 16, 18 reposent sensiblement à l'extrémité libre 44 du premier profilé 14.

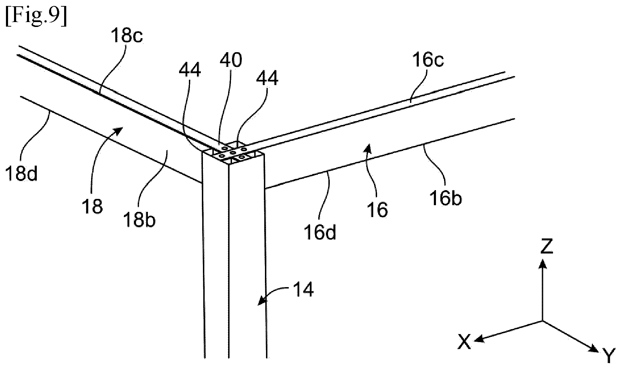

Dans le quatrième mode de réalisation de l'invention qui a été représenté à la figure 9, la platine (non visible sur la figure 9) est agencée en retrait de l'extrémité 44 du premier profilé 14, de sorte que les deuxièmes et troisièmes profilés 16, 18, qui sont reçus dans le premier profilé 14, affleurent à l'extrémité libre 44 de ce premier profilé.

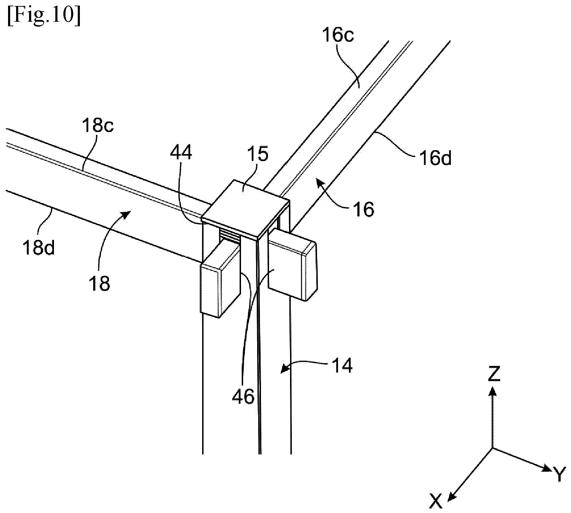

Dans le cinquième mode de réalisation de l'invention qui a été représenté aux figures 10 à 12, la platine 22 est encore plus agencée en retrait de l'extrémité du premier profilé 14, et les deuxième et troisième profilés 16, 18, sont reçus dans le premier profilé 14, qui est fermé par un bouchon 15.

Dans ces trois modes de réalisation, les deuxième et troisième profilés se coupent de préférence suivant l'axe Z du premier profilé 14.

Dans les quatrième et cinquième modes de réalisation de l'invention des figures 9 à 12, au moins une paroi verticale du premier profilé comporte une découpe 46 en U complémentaire d'une section d'un deuxième ou troisième profilé 16, 18, ladite découpe 46 en U débouchant à l'extrémité 44 du premier profilé 14.

Les extrémités des deuxième et troisième profilés peuvent indifféremment être contenues dans le premier profilé 14, comme c'est le cas du quatrième mode de réalisation de l'invention pour lequel seules les parois 14a et 14d du premier profilé 14 comportent une découpe 42.

En variante, les extrémités des deuxième et troisième profilés peuvent faire saillie à partir du profilé 14, comme c'est le cas dans le cinquième mode de réalisation de l'invention qui a été représenté aux figures 10 à 12, pour lequel chaque paroi 14a, 14b, 14c, 14d du premier profilé 14 comporte une découpe 46 en U.

Avantageusement, dans chacun de ces troisièmes à cinquième modes de réalisation de l'invention, comme précédemment pour chacun des deuxième ou troisième profilé 16, 18, au moins un perçage 40 est agencé dans chaque paroi latérale horizontale 16c, 18c opposée à une paroi latérale horizontale de fixation 16c , 18d de ce deuxième ou troisième profilé, coaxialement à la vis 34 de fixation 34. Ce perçage 40 est configuré pour permettre le passage de la vis 34 à travers la paroi 16c, 18c opposée à la paroi latérale de fixation 16d ,18d, de manière que la vis 34 n'assure le serrage que sur la paroi latérale de fixation 16d, 18d. Le perçage 40 est par exemple lui aussi fermé par un bouchon.

Sur la figure 8, les deuxième et troisième profilés 16, 18 comportent cinq perçages 40 traversés par des vis 34 dont seules deux ont été représentées, obturées par des bouchons correspondants. Les vis 34 sont des vis courtes, destinées à permettre le serrage seulement sur la paroi latérale de fixation 16d, 18d. Il sera compris que, en variantes, les vis 34 pourraient être des vis longues réalisant le serrage sur les parois 16c, 18c.

Il sera aussi compris que les bouchons 34 pourraient être remplacés par un capot (non représenté) en forme de croix, masquant les perçages 40.

Comme on l'a vu, la platine 12 est fixée à l'intérieur du premier profilé 14. Cette fixation pourrait être, par exemple, assurée par soudage. Toutefois, de préférence comme l'illustre la figure 13, la platine 42 comporte deux ailes 48 repliées à 90 degrés qui peuvent être fixées par vissage aux parois latérales du premier profilé 14. Ces ailes 48 pourraient être transversalement opposées l'une à l'autre. Toutefois, pour garantir une simplicité de montage de la platine 12 à l'intérieur du premier profilé 14, les ailes 48 sont agencées au contact de deux parois latérales adjacentes du premier profilé 14, par exemple les parois latérales verticales 14a et 14d. Ceci permet d'utiliser une platine 22 de surface légèrement inférieure à la section du premier profilé 14, pour faciliter sa manipulation avant de la fixer au premier profilé 14.

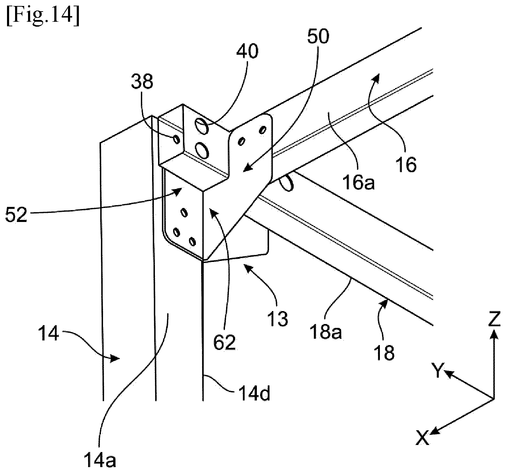

Les figures 14 à 17 illustrent un sixième mode de réalisation renforcé de l'invention reposant sur le principe des premier et deuxième modes de réalisation de l'invention, à cette différence que, outre que le premier profilé 14 est toujours fixé à une paroi latérale de fixation 16a, 18a de chacun des deuxième et troisième profilés 16, 18 par un système de fixation invisible du type décrit précédemment, il l'est de plus par au moins un système de fixation supplémentaire 13 qui est visible depuis l'extérieur des profilés 14, 16, 18.

Le système de fixation supplémentaire complète ici le système de fixation invisible 11 des figures 1 à 6, mais il sera compris qu'il peut trouver à compléter le système de fixation invisible de la figure 7 ou les autres variantes précédemment évoquées.

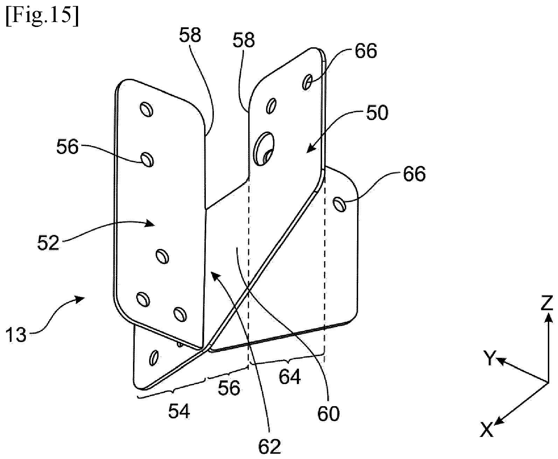

Comme l'illustre la figure 14, le système de fixation supplémentaire 13 comporte deux plaques entrecroisées 50, 52 s'étendant respectivement sur les parois verticales de fixation 16a, 18a des deuxième et troisième profilés 16, 18. Le détail de l'entrecroisement des plaques 50,52 a été représenté à la figure 15.

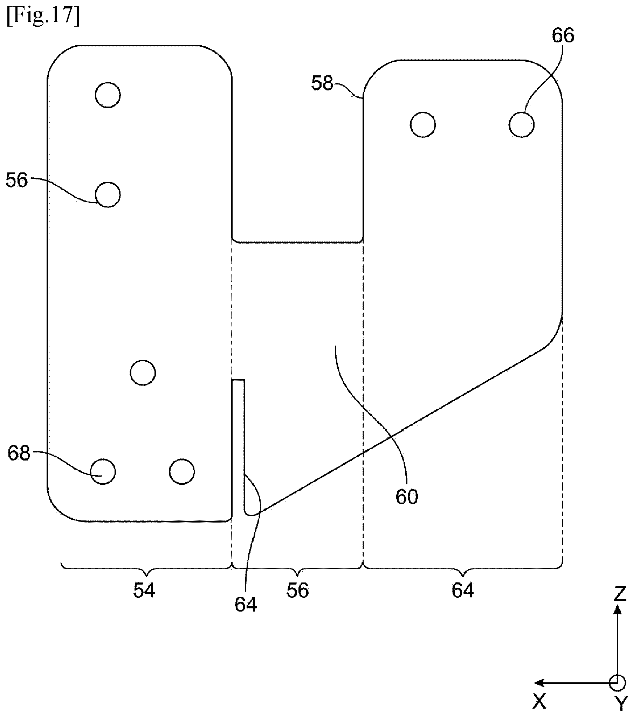

Les plaques 50 et 52 sont sensiblement similaires. Pour cette raison, seule la plaque de fixation 50 a été représentée à la figure 17. La description relative à la plaque 50 s'applique néanmoins à la plaque 52.

Comme l'illustre la figure 17, chaque plaque 50 comporte en premier lieu une première partie 54, interposée entre la paroi verticale de fixation 16a, 18a du deuxième ou troisième profilé 16, 18 et la paroi 14a, 14d de fixation du premier profilé 14. Cette première partie est traversée par l'au moins une vis de fixation qui traverse un perçage 66 formé dans cette première partie 54. En particulier, le perçage 66 est coaxial avec le perçage 38 des deuxièmes et troisièmes profilés 16, 18, et avec les orifices d'accueil 36 de la platine 22.

A partir de cette première partie 54, la plaque 50 comporte une deuxième partie 56 comportant une découpe 58 complémentaire de l'autre des deuxième ou troisième profilés 16, 18. Cette deuxième partie 56 comporte sous cette découpe 58 une portion inférieure 60 qui est assemblée à une portion inférieure similaire de la plaque 52 associée à l'autre des deuxième ou troisième profilés par un deuxième assemblage à mi-bois 62, qui a été représenté en particulier à la figure 15. Pour réaliser un tel deuxième assemblage à mi-bois, la portion inférieure 60 comporte une fente 63 d'une largeur correspondant à l'épaisseur de l'autre plaque 52.

Il sera compris que les fentes 63 sont opposées d'une plaque à l'autre pour que chaque fente 63 puisse recevoir la plaque opposée 50, 52.

Enfin, s'étendant à partir de cette deuxième partie 56, la plaque 50 comporte une troisième partie 64 s'étendant sur la paroi verticale 16a, 16b de fixation dudit deuxième ou troisième profilé 16, 18, qui est fixée à ladite paroi verticale de fixation par des premières vis supplémentaires (non représentées) qui traversent des perçages 66 formés dans cette troisième partie 64.

Avantageusement, chaque première partie 54 est en outre fixée à la paroi de fixation 14a, 14d du premier profilé 14 sous la zone de croisement 28 par des secondes vis supplémentaires. Pour cela, chaque première partie 54 comporte des perçages 68 situés sous la zone de croisement et qui traversent des perçages (non représentés) formés dans les parois de fixation du premier profilé 14.

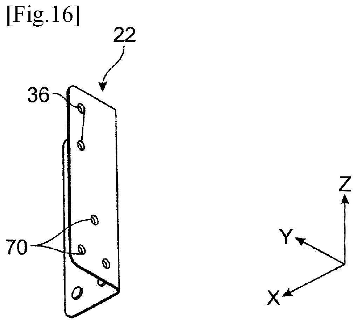

Avantageusement, comme l'illustre la figure 16, chaque platine 22 conformé en équerre se prolonge également sous la zone de croisement 28. Elle comporte sous la zone de croisement 28 des orifices d'accueil supplémentaires 70 destinés à recevoir les secondes vis supplémentaires des plaques 50, 52. Cette configuration garantit une répartition optimale des efforts supportés par les plaques 50, 52.

L'invention propose donc un élément de mobilier extérieur 10 de grande solidité qui peut être mis en œuvre dans un mobilier extérieur 12 de manière esthétique et avec une grande protection vis-à-vis des intempéries.

## Revendications

1. Elément (12) de mobilier extérieur, comportant au moins un premier profilé tubulaire (14) formant un montant orienté selon une première direction (Z), des deuxième et troisième profilés tubulaires (16, 18) formant des traverses orientées selon des deuxièmes et troisièmes directions perpendiculaires (X, Y) à la première direction (Z), les deuxième et troisième profilés se croisant dans une zone de croisement (28) et étant fixés au premier profilé (14) au niveau de la zone de croisement (28), **caractérisé en ce que** :
- les deuxième et troisième profilés (16, 18) sont assemblés dans la zone de croisement (28) par un premier assemblage à mi-bois (23),
- le premier profilé (14) est fixé à une paroi du deuxième profilé (16) et/ou du troisième profilé (18) par un système (11) de fixation invisible depuis l'extérieur des profilés.

2. Elément (12) de mobilier selon l'une des revendications précédentes, **caractérisé en ce que** chacun des premier à troisième profilé (14, 16, 18) est tubulaire de section carrée ou rectangulaire, avec quatre parois latérales (14a, 14b, 14c, 14d, 16a, 16b, 16c, 16d, 18a, 18b, 18c, 18d) opposées deux à deux et s'étendant suivant la direction (X, Y, Z) dudit profilé (14, 16, 18).

3. Elément de mobilier (12) selon la revendication précédente **caractérisé en ce que** le système de fixation invisible (11) comporte un ensemble composé d'au moins une platine de fixation (22) et d'au moins une vis (34), ladite au moins une vis (34) traversant une seule paroi latérale (16a, 16b, 16d, 18a, 18b, 18d), dite de fixation du deuxième ou troisième profilé (16, 18), ladite platine (22) étant logée à l'intérieur du premier profilé (14) et présentant au moins un orifice (36) d'accueil de la vis (34), notamment taraudé.

4. Elément de mobilier (12) selon la revendication précédente **caractérisé en ce que** la platine (22) de fixation est disposée au contact d'au moins une paroi latérale (14a, 14b, 14c, 14d) du premier profilé (14).

5. Elément de mobilier (12) selon l'une des revendications 3 ou 4, **caractérisé en ce que** la platine (22) comporte au moins une plaque (27) dite de fixation appliquée au contact d'une paroi latérale (14a, 14b, 14c, 14d), dite de fixation, du premier profilé (14), la vis (34) traversant successivement une paroi latérale (16a, 16b, 18a, 18b) dite de fixation, du deuxième profilé (16) ou du troisième profilé (18), puis la paroi latérale de fixation (14a, 14b, 14c , 14d) du premier profilé (14), puis la plaque de fixation (27) via l'orifice d'accueil (36).

6. Elément de mobilier (12) selon l'une des revendications 3 à 5, **caractérisé en ce que** la platine (22) est conformée en une équerre comportant deux branches formées chacune d'une plaque de fixation (27), les plaques de fixation (27) étant appliquées au contact de deux parois latérales adjacentes (14a, 14b, 14c, 14d) de fixation du premier profilé (14).

7. Elément de mobilier (12) selon l'une des revendications 5 ou 6, **caractérisé en ce que** le premier profilé (14) est fixé à une paroi latérale (16a, 16b, 18a, 18b) de fixation de chacun des deuxième et troisième profilés (16, 18) par un système de fixation invisible (11), et de surcroît par au moins un système de fixation supplémentaire (62) visible depuis l'extérieur des profilés (14, 16, 18), ledit système de fixation supplémentaire (62) comportant deux plaques entrecroisées (50, 52) s'étendant sur les parois latérales (14a, 14d, 16a, 18a) de fixation des premier à troisième profilés (14, 16, 18) et fixées auxdits premier à troisième profilés (14, 16, 18).

8. Elément de mobilier (12) selon la revendication 7, **caractérisé en ce que** chaque plaque (50, 52) comporte :
- une première partie (54), interposée entre la paroi latérale (16a, 18a) de fixation dudit deuxième ou troisième profilé (16, 18) et la paroi de fixation (14a, 14d) du premier profilé (14) en étant traversée par l'au moins une vis de fixation (34),
- une deuxième partie (56) comportant une découpe (58) complémentaire de l'autre des deuxième ou troisième profilés (16, 18), ladite deuxième partie (56) comportant sous cette découpe une portion inférieure (60) assemblée à une portion inférieure (60) de la plaque (50, 52) associée à l'autre des deuxième ou troisième profilés (16, 18) par un deuxième assemblage à mi-bois,
- une troisième partie (34) s'étendant sur la paroi latérale (16a, 18a) de fixation dudit deuxième ou troisième profilé, et fixée à ladite paroi latérale (16a, 18a) par des premières vis supplémentaires.

9. Elément de mobilier selon la revendication 4, **caractérisé en ce que** la platine (22) s'étend transversalement par rapport à la première direction (X) et est fixée au contact d'au moins deux parois latérales (14a, 14d) du premier profilé (14).

10. Tonnelle (10) comportant quatre éléments (12) de mobilier extérieur selon l'une des revendications précédentes, associés en quatre montants (14) de premières directions verticales (Z) et au moins quatre traverses (16 , 18) dont deux de deuxième direction horizontale (X) et deux de troisième direction horizontale (Y).
